# EUROPÄISCHE PATENTANMELDUNG

(11) **EP 0 894 661 A2**
(43) Veröffentlichungstag der Anmeldung: **03.02.1999**
(21) Anmeldenummer: 98113792.0
(22) Anmeldetag: 23.07.1998
(51) Int. Cl.: B60L 15/20, H01C 10/32, H01C 10/36

(54) **Bedienvorrichtung für ein Flurförderzeug**

(30) Priorität: 30.07.1997 DE 19732888
(71) Anmelder: Still & Saxby S.à.r.l., 77107 Meaux-Cedex (FR)
(72) Erfinder: Weber, Edgar, Dipl.-Ing., 72459 Albstadt (DE); Schöller, Eugen, Dipl.-Ing., 72336 Balingen (DE); Nedele, Hartmut, 72555 Metzingen/Glems (DE); Bruder, Frédéric, Dipl.-Ing., 60300 Senlis (FR); Maller, Pierre, Dipl.-Ing., 63864 Glattbach (DE)
(74) Vertreter: Kasseckert, Rainer

(57) **Zusammenfassung**

Gegenstand der Erfindung ist eine Bedienvorrichtung für ein Flurförderzeug, insbesondere Deichsel eines deichselgelenkten Flurförderzeugs, mit einem Schaltelement zur Erzeugung eines mehrstufigen elektrischen Steuersignals. Erfindungsgemäß weist das Schaltelement mindestens eine Kontaktfolie (6) auf, die mittels einer auf die Kontaktfolie (6) ausübbaren Druckkraft mit mindestens einer von mehreren der Kontaktfolie (6) zugeordneten Kontaktstellen (2) elektrisch verbindbar ist, wobei die Kontaktstellen (2) durch elektrische Widerstände (R1-8) verbunden sind. Vorzugsweise sind die elektrischen Widerstände (R1-8) in Reihe geschaltet, wobei jeweils die Verbindungsleitung zwischen zwei Widerständen mit einer Kontaktstelle (2) verbunden ist. Es sind zwei, jeweils eine Druckkraft auf die Kontaktfolie (6) ausübende Schleifer (8a,b) vorgesehen, wodurch eine Kontaktstelle (2) mit einer Kontaktfläche (3) verbindbar ist.

## Beschreibung

Bedienvorrichtung für ein Flurförderzeug, insbesondere Deichsel eines deichselgelenkten Flurförderzeugs, mit einem Schaltelement zur Erzeugung eines mehrstufigen elektrischen Steuersignals.

Bedienvorrichtungen für Flurförderzeuge sind mit Bedienelementen zur Betätigung der verschiedenen Funktionen des Flurförderzeugs ausgerüstet. Abhängig von der jeweiligen zu steuernden Funktion weisen die Bedienelemente dabei Schaltelemente zur Erzeugung von Ein/Aus-Steuersignalen, mehrstufigen oder stufenlosen Steuersignalen auf. Mehrstufige oder stufenlose Steuersignale werden dabei insbesondere zur Steuerung der Fahrgeschwindigkeit des Flurförderzeugs oder zur Steuerung der Hebe- und Senkgeschwindigkeit einer Lastaufnahmevorrichtung verwendet.

Bekannte Signalgeber zur Erzeugung von mehrstufigen Steuersignalen erfordern einen erheblichen Bauaufwand und bestehen aus einer Vielzahl verschleißbehafteter mechanischer und elektrischer Bauteile.

Ein Signalgeber für ein Flurförderzeug zur Erzeugung eines stufenlosen Steuersignals ist beispielsweise aus dem DE-GM 94 17 201 bekannt. Das darin beschriebene, als Folienpotentiometer ausgeführte Schaltelement weist eine auf einer flexiblen Folie aufgebrachte Widerstandsbahn auf, mit dem ein zum Betätigungsweg des Bedienelements proportionales Steuersignal erzeugbar ist. Die elektrischen und mechanischen Komponenten dieses bekannten Signalgebers erfordern einen erheblichen Bauaufwand.

Der vorliegenden Erfindung liegt die Aufgabe zugrunde, eine Bedienvorrichtung mit einem einfach aufgebauten, verschleißarmen Schaltelement zur Erzeugung eines mehrstufigen Steuersignals zur Verfügung zu stellen.

Diese Aufgabe wird erfindungsgemäß dadurch gelöst, daß das Schaltelement mindestens eine Kontaktfolie aufweist, die mittels einer auf die Kontaktfolie ausübbaren Druckkraft mit mindestens einer von mehreren der Kontaktfolie zugeordneten Kontaktstellen elektrisch verbindbar ist, wobei die Kontaktstellen durch elektrische Widerstände verbunden sind. Die elektrisch leitende Kontaktfolie wird mittels der Druckkraft auf mindestens eine auf einer Platine angeordnete Kontaktstelle gedruckt, wodurch eine elektrische Verbindung zwischen der Kontaktfolie und der Kontaktstelle hergestellt wird. In Abhängigkeit von dem Ort, an dem die Druckkraft aufgebracht wird, kann eine bestimmte Kontaktstelle mit der Kontaktfolie verbunden werden. Dieser Ort wird von der Bedienperson durch die Stellung des Schaltelements festgelegt. Dadurch, daß die verschiedenen Kontaktstellen miteinander über Widerstände verbunden sind, kann der Gesamtwiderstand des Schaltelements durch die Bedienperson in vorgegebenen Stufen festgelegt werden.

Eine vorteilhafte Ausgestaltung der Erfindung liegt vor, wenn die elektrischen Widerstände in Reihe geschaltet sind, wobei jeweils die Verbindungsleitung zwischen zwei Widerständen mit einer Kontaktstelle verbunden ist. Es liegt somit eine Reihenschaltung von Widerständen vor. Die Kontaktfolie wird in Abhängigkeit von dem Ort, an dem die Druckkraft aufgebracht wird, mit einer bestimmten Verbindungsleitung zweier Widerstände verbunden.

Mit besonderem Vorteil weist jeder der in Reihe geschalteten Widerstände den gleichen Widerstandswert auf. Die Anzahl der unterschiedlichen Bauteile kann somit gering gehalten werden.

Ein anderer Vorteil ergibt sich, wenn die in Reihe geschalteten Widerstände unterschiedliche Widerstandswerte aufweisen. Somit ergeben sich über dem gesamten Schaltbereich des Schaltelements unterschiedliche Widerstandssprünge. Wenn das Schaltelement beispielsweise zum Steuern der Fahrgeschwindigkeit verwendet wird, können die Widerstandssprünge im Schaltbereich für langsame Fahrgeschwindigkeit feiner abgestuft sein, als im Schaltbereich für schnelle Fahrgeschwindigkeit. Durch diese Maßnahme wird eine feinfühlige Steuerbarkeit im langsamen Geschwindigkeitsbereich erreicht.

Zweckmäßigerweise sind die Kontaktstellen gemeinsam auf einer Platine angeordnet.

Gemäß einer vorteilhaften Weiterbildung der Erfindung sind die Kontaktstellen mittels der Kontaktfolie mit einer auf der selben Platine angeordneten weiteren Kontaktfläche verbindbar. Auf der Platine ist eine Kontaktfläche angeordnet, die über die Kontaktfolie in der oben beschriebenen Weise mit einer bestimmten Kontaktstelle verbunden wird. Sämtliche Anschlüsse für von dem Schaltelement nach außen führende Leitungen können somit direkt an auf der Platine angeordnet werden. Die Kontaktfolie weist keine Anschlüsse für elektrische Leitungen auf.

Zweckmäßig ist es, wenn ein erster bewegbarer Schleifer vorgesehen ist, mit dem die Druckkraft auf die Kontaktfolie aufbringbar ist. Der bewegbare Schleifer wird bei dem Betätigen des Schaltelements über die Kontaktfolie bewegt, wodurch der Ort, an dem der Schleifer auf die Kontaktfolie drückt verändert wird. Durch den Schleifer fließt dabei kein elektrischer Strom, so daß praktisch keine Abnützung des Schleifers stattfindet.

Gleichermaßen zweckmäßig ist es, wenn ein zweiter, eine Druckkraft auf die Kontaktfolie ausübender Schleifer vorgesehen ist, wodurch die Kontaktfolie mit der Kontaktfläche verbindbar ist.

Mit besonderem Vorteil ist die Bewegung des ersten Schleifers mechanisch an die Bewegung des zweiten Schalters gekoppelt. Es ist somit eine gleichlaufende Bewegung des Schleifers über der Kontaktfläche gewährleistet. Der Abstand zwischen den beiden Schleifern bleibt jederzeit gleich. Hierdurch können unerwünschte Schwankungen des Gesamtwiderstands des Schaltelements vermieden werden.

Besondere Vorteile ergeben sich, wenn die Druckkraft des Schleifers auf die Kontaktfolie mittels Federkraft erzeugbar ist, wobei die Größe der Druckkraft unabhängig von der Position des Schleifers auf der Kontaktfolie ist. Die Druckkraft der Schleifer ist dabei so eingestellt, daß eine elektrische Verbindung der Kontaktfolie mit der Kontaktfläche bzw. der jeweiligen Kontaktfläche sichergestellt ist, gleichzeitig jedoch kein mechanischer Verschleiß des Signalgebers auftritt.

In einer besonders zweckmäßigen Weiterbildung der Erfindung weisen die Kontaktstellen in Bewegungsrichtung des Schleifers zumindest teilweise unterschiedliche Abmessungen auf. Durch unterschiedliche Breiten der Kontaktstellen kann der erforderliche Betätigungsweg des Schaltelements zwischen zwei Schaltstufen unterschiedlich lang sein. Wenn das Schaltelement beispielsweise zum Steuern der Fahrgeschwindigkeit verwendet wird, können die Breiten der Kontaktstellen im Schaltbereich für langsame Fahrgeschwindigkeit breiter sein, als im Schaltbereich für schnelle Fahrgeschwindigkeit. Durch diese Maßnahme wird eine feinfühlige Steuerbarkeit im langsamen Geschwindigkeitsbereich erreicht.

Ein besonderer Vorteil liegt vor, wenn mit dem Schaltelement ein zweikanaliges Steuersignal erzeugbar ist. Insbesondere bei einem Schaltelement zur Steuerung einer Hubvorrichtung bietet eine Zweikanaligkeit des Steuersignals einen erheblichen Sicherheitsgewinn.

Gemäß einer weiteren Ausgestaltung der Erfindung ist mindestens eine zusätzliche Kontaktstelle vorgesehen, die keine Verbindung zu den übrigen, mittels Widerständen miteinander verbundenen Kontaktstellen aufweist. Diese zusätzliche Kontaktstelle wird genau dann mit der Kontaktfolie verbunden, wenn sich das Schaltelement in Nullstellung befindet. Die Nullstellung kann somit über eine getrennte elektrische Schaltung erfaßt werden, womit eine Zweikanaligkeit des Schaltelements erreicht wird.

Weitere Vorteile und Einzelheiten der Erfindung werden anhand des in den schematischen Figuren dargestellten Ausführungsbeispiels näher erläutert. Dabei zeigen
- Fig. 1a,b: ein Schaltelement einer erfindungsgemäßen Bedienvorrichtung im Querschnitt,
- Fig. 2a,b,c: ein Schaltelement einer erfindungsgemäßen Bedienvorrichtung in Draufsicht.

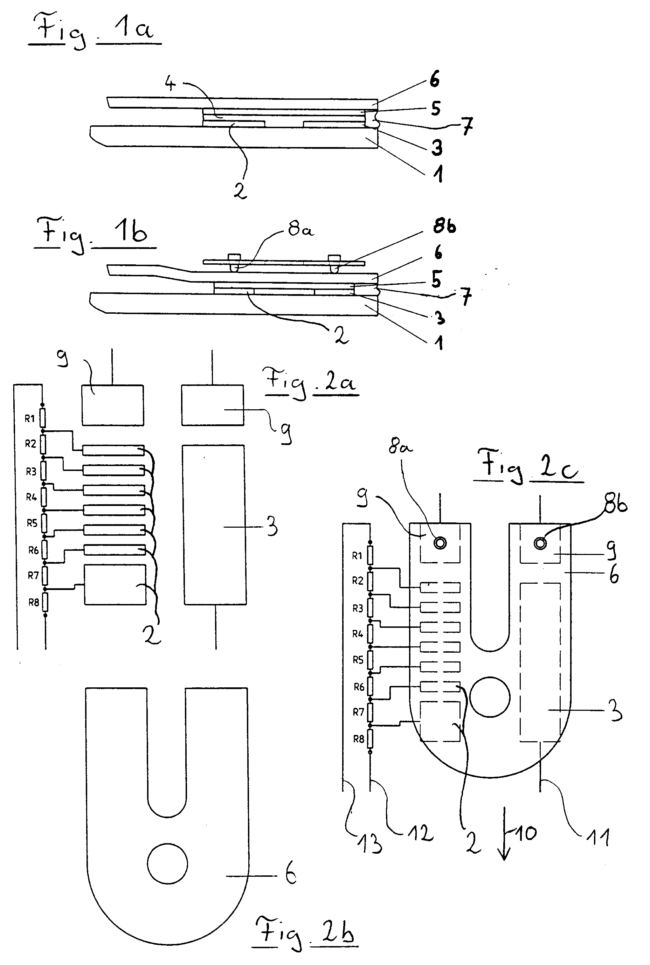

In Figur 1a ist der Querschnitt des Schaltelements in nicht betätigtem Zustand dargestellt. Auf einer im wesentlichen starren Platine 1 sind mehrere, in dieser Ansicht einander verdeckende, Kontaktstellen 2 sowie eine Kontaktfläche 3 aufgebracht. Oberhalb der Kontaktstellen 2 bzw. der Kontaktfläche 3 befindet sich, durch einen Luftspalt 4 beabstandet, eine mit einer elektrisch leitenden Schicht 5 versehene Kontaktfolie 6. Der Luftspalt 4 ist dabei durch einen zwischen der Platine 1 und der Kontaktfolie 6 angeordneten, von einer Folie gebildeten Abstandshalter 7 sichergestellt. Im nicht betätigten Zustand sind die Kontaktstellen 2 elektrisch von der Kontaktfläche 3 getrennt.

Figur 1b zeigt das Schaltelement in betätigtem Zustand. Ein erster Schleifer 8a übt dabei eine Druckkraft auf die Kontaktfolie 6 im Bereich einer Kontaktstelle 2 auf. Gleichzeitig drückt ein zweiter Schleifer 8b auf die Kontaktfolie 6 im Bereich der Kontaktfläche 3. Die leitende Schicht 5 der Kontaktfolie 6 wird hierdurch mit der Kontaktfläche 3 und, abhängig von der Position des Schleifers 8a, mit einer bestimmten Kontaktstelle 2 verbunden. Der Luftspalt zwischen Platine 1 und Kontaktfolie 6 kann hierbei, wie in Fig. 1b angedeutet, durch elastisches Zusammendrücken des Abstandshalters 7 überbrückt werden. Vorzugsweise ist der Abstandshalter 7 jedoch aus nicht elastischem Material ausgeführt. Der Luftspalt wird dann durch elastische Verformung der Kontaktfolie 6 im Bereich der Schleifer 8a,b überbrückt. Bei der beschriebenen Anordnung findet kein Stromfluß durch die Schleifer 8a,b statt. Die Schleifer 8a,b drücken unabhängig von der Stellung des Schaltelements mit konstanter Kraft auf die Kontaktfolie 6.

Die Anordnung der Kontaktstellen 2 und der Kontaktfläche 3 auf der Platine 1 ist in Figur 2a dargestellt. Ebenfalls dargestellt ist die erfindungsgemäße Anordnung einer Reihe von Widerständen R1 bis R8, wobei jede Kontaktstelle 2 mit einer Verbindungsleitung zweier Widerstände verbunden ist. Die Abstände zwischen den Kontaktstellen 2 sind so breit ausgeführt, daß bei betätigtem Schaltelement jederzeit mindestens eine Kontaktstelle 2 mit der Kontaktfolie 6 verbunden ist. Die in der Zeichnung unterste Kontaktstelle 2, über der sich der Schleifer 8a bei in Endstellung betätigtem Schaltelement befindet, ist breiter als die übrigen Kontaktstellen 2 ausgeführt. Es ist damit sichergestellt, daß bei in Endstellung betätigtem Schaltelement der Schleifer 8a keinesfalls über die in der Zeichnung unterste Kontaktstelle 2 hinaus bewegt werden kann.

In der Zeichnung oberhalb der Kontaktstellen 2 und der Kontaktfläche 3 befinden sich jeweils eine zusätzliche Kontaktstelle 9, welche mittels der Schleifer 8a,b über die Kontaktfolie 6 bei in Nullstellung befindlichem Schaltelement miteinander verbunden sind. Mit den zusätzlichen Kontaktstellen 9 kann die Nullstellung des Schaltelements über eine getrennte elektrische Schaltung erfaßt werden, wodurch die Voraussetzungen für eine zweikanalige Signalverarbeitung erfüllt sind.

In Figur 2b ist die Kontaktfolie 6 in Draufsicht dargestellt. Die Kontaktfolie 6 ist an ihrer Unterseite vollständig mit der elektrisch leitenden Schicht 5 bedeckt.

Figur 2c zeigt die Anordnung der Kontaktfolie im montierten Zustand, also oberhalb der Kontaktstellen 2, 9 bzw. der Kontaktfläche 3. Die Schleifer 8a,b sind in ihrer Position bei Nullstellung des Schaltelements dargestellt. Bei Betätigung des Schaltelements werden die Schleifer 8a,b zueinander parallel in Richtung 10 über die Kontaktfolie 6 bewegt. Dabei werden gleichzeitig höchstens zwei nebeneinander liegende Kontaktstellen 2 mit der Kontaktfläche 3 verbunden. Der elektrische Widerstand zwischen dem Anschluß 11 und den Anschlüssen 12 bzw. 13 ändert sich somit stufenweise mit der Bewegung des Schleifer 8a über der Kontaktfolie 6, wobei eine Stellung des Schleifers 8a, in der zwei nebeneinanderliegende Kontaktstellen 2 mit der Kontaktfolie 6 verbunden sind, hinsichtlich des Widerstands eine Zwischenstufe darstellt. Der sich stufenweise ändernde Gesamtwiderstand kann zur Erzeugung eines mehrstufigen Steuersignals, beispielsweise für den Fahrantrieb oder für eine Hubvorrichtung verwendet werden.

## Patentansprüche

1. Bedienvorrichtung für ein Flurförderzeug, insbesondere Deichsel eines deichselgelenkten Flurförderzeugs, mit einem Schaltelement zur Erzeugung eines mehrstufigen elektrischen Steuersignals, **dadurch gekennzeichnet**, daß das Schaltelement mindestens eine Kontaktfolie (6) aufweist, die mittels einer auf die Kontaktfolie (6) ausübbaren Druckkraft mit mindestens einer von mehreren der Kontaktfolie (6) zugeordneten Kontaktstellen (2) elektrisch verbindbar ist, wobei die Kontaktstellen (2) durch elektrische Widerstände (R1-8) verbunden sind.

2. Bedienvorrichtung nach Anspruch 1, dadurch gekennzeichnet, daß die elektrischen Widerstände (R1-8) in Reihe geschaltet sind, wobei jeweils die Verbindungsleitung zwischen zwei Widerständen mit einer Kontaktstelle (2) verbunden ist.

3. Bedienvorrichtung nach Anspruch 2, dadurch gekennzeichnet, daß jeder der in Reihe geschalteten Widerstände (R1-8) den gleichen Widerstandswert aufweist.

4. Bedienvorrichtung nach Anspruch 2, dadurch gekennzeichnet, daß die in Reihe geschalteten Widerstände (R1-8) unterschiedliche Widerstandswerte aufweisen.

5. Bedienvorrichtung nach einem der Ansprüche 1 bis 4, dadurch gekennzeichnet, daß die Kontaktstellen (2) gemeinsam auf einer Platine (1) angeordnet sind.

6. Bedienvorrichtung nach Anspruch 5, dadurch gekennzeichnet, daß die Kontaktstellen (2) mittels der Kontaktfolie (6) mit einer auf der selben Platine (1) angeordneten weiteren Kontaktfläche (3) verbindbar sind.

7. Bedienvorrichtung nach einem der Ansprüche 1 bis 6, dadurch gekennzeichnet, daß ein erster bewegbarer Schleifer (8a) vorgesehen ist, mit dem die Druckkraft auf die Kontaktfolie (6) aufbringbar ist.

8. Bedienvorrichtung nach Anspruch 7, dadurch gekennzeichnet, daß ein zweiter, eine Druckkraft auf die Kontaktfolie (6) ausübender Schleifer (8b) vorgesehen ist, wodurch die Kontaktfolie (6) mit der Kontaktfläche (3) verbindbar ist.

9. Bedienvorrichtung nach Anspruch 8, dadurch gekennzeichnet, daß die Bewegung des ersten Schleifers (8a) mechanisch an die Bewegung des zweiten Schleifers (8b) gekoppelt ist.

10. Bedienvorrichtung nach einem der Ansprüche 7 bis 9, dadurch gekennzeichnet, daß die Druckkraft des Schleifers (8a,b) auf die Kontaktfolie (6) mittels Federkraft erzeugbar ist, wobei die Größe der Druckkraft unabhängig von der Position des Schleifers (8a,b) auf der Kontaktfolie (6) ist.

11. Bedienvorrichtung nach einem der Ansprüche 7 bis 10, dadurch gekennzeichnet, daß die Kontaktstellen (2) in Bewegungsrichtung des Schleifers (8a) zumindest teilweise unterschiedliche Abmessungen aufweisen.

12. Bedienvorrichtung nach einem der Ansprüche 1 bis 11, dadurch gekennzeichnet, daß mit dem Schaltelement ein zweikanaliges Steuersignal erzeugbar ist.

13. Bedienvorrichtung nach einem der Ansprüche 1 bis 12, daß mindestens eine zusätzliche Kontaktstelle (9) vorgesehen ist, die keine Verbindung zu den übrigen, mittels Widerständen (R1-8) miteinander verbundenen Kontaktstellen (2) aufweist.
